# EUROPEAN PATENT APPLICATION

(11) **EP 2 835 729 A1**
(43) Date of publication of application: **11.02.2015**
(21) Application number: 13801237.2
(22) Date of filing: 19.07.2013
(51) Int. Cl.: G06F 3/048

(54) **METHOD FOR CONTROLLING POSITION OF FLOATING WINDOW AND TERMINAL**

(30) Priority: 09.10.2012 CN 201210379758
(71) Applicant: ZTE Corporation, Shenzhen, Guangdong 518057 (CN)
(72) Inventor: WEI, Xiaoli, Shenzhen Guangdong 518057 (CN); SU, Hao, Shenzhen Guangdong 518057 (CN); SUN, Yanjun, Shenzhen Guangdong 518057 (CN); SHEN, Zhan, Shenzhen Guangdong 518057 (CN)
(74) Representative: Skinner, Michael Paul
(86) International application number: PCT/CN2013/079710
(87) International publication number: WO 2013/182149

(57) **Abstract**

A method for controlling a position of a floating window and a terminal are provided. The terminal includes: a display screen, a user operation receiving module, an event distributing module, a floating window control module and a display control module. The user operation receiving module is configured to receive an operation event of user and send it to the event distributing module; the event distributing module is configured to send the received operation event to the floating window control module; the floating window control module is configured to: after determining that the received operation event is a preset floating window operation control event, use coordinates of operation event as coordinates of floating window and notify the display control module of the coordinates of floating window; and the display control module is configured to receive the coordinates of floating window from the floating window control module and display the floating window at a position on the display screen corresponding to the coordinates of the floating window. By using the method and the terminal in the embodiments of the present invention, the floating window can be made in place according to the needs of user, thereby effectively achieving the ease of use of the terminal and improving the user experience.

## Description

### Technical Field

The present invention relates to the field of processing technology of a terminal with a touch screen, and more particularly, to a method for controlling the position of a floating window and a terminal thereof

### Background of the Invention

With the mobile terminals entering into the intelligent era, terminals with large screens (especially touch screens) are becoming more and more popular, and there are more and more floating designs on such terminals, especially some of the floating windows can quickly perform function operations and application navigations for the users, and their shapes vary and their operations are flexible, which brings the users a new usage experience. Since a general floating window is a small window on another interface, under the condition that the display and operability are ensured, it does not affect the display and operation of the bottom application interfaces, thus many floating windows have achieved the movable functions. In the current stage, most of the methods for moving the floating windows include the user pressing and dragging the floating windows. If a floating window is relatively small or its color is close to the bottom application, since it is less prominent, the floating window is difficult to be found when the user needs to use it, moreover, for a user who uses one hand to operate the mobile phone with a large screen, if the floating window is far away from the operating fingers, the floating window is relatively difficult to be operated.

### Summary of the Invention

The embodiment of the present invention provides a method for controlling a position of a floating window and a terminal thereof, to solve the problem that it is difficult to operate a floating window since it is inconvenient for the user to change the position of the floating window.

The embodiment of the present invention provides a terminal, comprising: a display screen, a user operation receiving module, an event distributing module, a floating window control module and a display control module; wherein
said user operation receiving module is configured to: receive and send an operation event of a user to said event distributing module;
said event distributing module is configured to: send the received operation event to said floating window control module;
said floating window control module is configured to: after determining that the received operation event is a preset floating window operation control event, take coordinates of said operation event as coordinates of said floating window, and notify the coordinates of said floating window to said display control module; and
said display control module is configured to: receive the coordinates of said floating window from said floating window control module, and display said floating window at a position on the display screen corresponding to the coordinates of said floating window.

The abovementioned terminal may further have the following feature:
said floating window control module is further configured to: before receiving said operation event, take the coordinates of said floating window on the display screen as source coordinates, take the coordinates of said operation event as target coordinates, determine N coordinates on a trajectory from said source coordinates to said target coordinates, wherein, N is an integer greater than zero; sequentially take said N coordinates as coordinates of said floating window and notify them to said display control module, and take the coordinates of said operation event as the coordinates of said floating window, and notify them to said display control module.

The abovementioned terminal may further have the following feature:
the trajectory from said source coordinates to said target coordinates is a line segment trajectory.

The abovementioned terminal may further have the following feature:
said floating window control module is further configured to: after receiving said operation event, when determining that a horizontal distance from the coordinates of said operation event to a boundary of said display screen is less than a half of length of said floating window, revise the coordinates of said operation event on said display screen so that the horizontal distance from the coordinates of said operation event to the boundary of said display screen is equal to or greater than a half of the length of said floating window; when determining that a vertical distance from the coordinates of said operation event to the boundary of said display screen is less than a half of width of said floating window, revise the coordinates of said operation event on said display screen so that the vertical distance from the coordinates of said operation event to the boundary of said display screen is equal to or greater than a half of the width of said floating window.

The abovementioned terminal may further have the following feature:
when said display screen is a touch screen, said floating window operation control event is a long-pressing operation event, a double-clicking operation event or a swiping operation event.

The embodiment of the present invention further provides a method for controlling a position of a floating window, comprising:
a terminal receiving an operation event of a user, after determining that said received operation event is a preset floating window operation control event, taking coordinates of said operation event on a display screen as coordinates of said floating window, and displaying said floating window at a position on said display screen corresponding to the coordinates of said floating window.

The abovementioned method may further have the following feature:
said method further comprises:
   before said terminal receives said operation event, taking the coordinates of said floating window on said display screen as source coordinates, taking the coordinates of said operation event on said display screen as target coordinates, determining N coordinates on a trajectory from said source coordinates to said target coordinates, wherein, N is an integer greater than zero; sequentially taking said N coordinates as coordinates of said floating window, and displaying said floating window at the position on said display screen corresponding to the coordinates of said floating window, and taking the coordinates of said operation event on said display screen as the coordinates of said floating window, and displaying said floating window at the position on said display screen corresponding to the coordinates of said floating window.

The abovementioned method may further have the following feature:
said trajectory from said source coordinates to said target coordinates is a line segment trajectory.

The abovementioned method may further have the following feature:
said method further comprises:
   after said terminal receives said operation event, when determining that a horizontal distance from the coordinates of said operation event to a boundary of said display screen is less than a half of length of said floating window, revising the coordinates of said operation event on said display screen, so that the horizontal distance from the coordinates of said operation event to the boundary of said display screen is equal to or greater than a half of the length of said floating window; when determining that a vertical distance from the coordinates of said operation event to the boundary of said display screen is less than a half of width of the floating window, revising the coordinates of said operation event on said display screen so that the vertical distance from the coordinates of said operation event to the boundary of said display screen is equal to or greater than a half of the width of said floating window.

The abovementioned method may further have the following feature:
when said display screen is a touch screen, said floating window operation control event is a long-pressing operation event, a double-clicking operation event or a swiping operation event.

The scheme for moving the floating window and moving it to the position required by the user provided by the embodiment of the present invention, for the non-touch screen, can easily control the position of the floating window with the buttons; for the touch screen, it does not require the user to press and drag the floating window so as to move the floating frame, and the user directly touches any position on the touch screen, and the floating window can eventually be located to the specified location, so as to make the floating window in place according to the needs of user, so as to achieve the ease for use of the terminal and improve the user experience.

### Brief Description of the Drawings

FIG. 1 is a structural diagram of a terminal in accordance with an embodiment of the present invention.
FIG. 2 is a schematic diagram of a method for controlling the position of a floating window in accordance with a first embodiment of the present invention.
FIG. 3 is a schematic diagram of a method for controlling the position of the floating window in accordance with a second embodiment of the present invention.

### Preferred Embodiments of the Present Invention

Hereinafter with reference to the accompanying drawings, the embodiments of the present invention will be described in detail. It should be noted that, in the case of no conflict, the embodiments of the present application and features in the embodiments may be arbitrarily combined with each other.

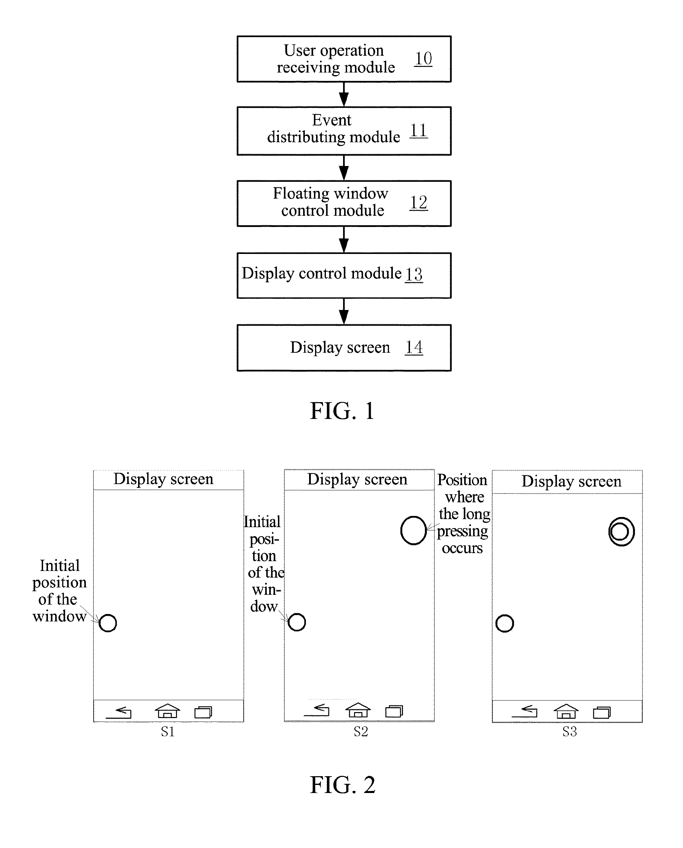

As shown in FIG. 1, the terminal comprising the display 14 comprises a user operation receiving module 10, an event distributing module 11, a floating window control module 12, and a display control module 13; wherein
the user operation receiving module 10 is configured to: receive and send an operation event for the display screen to the event distributing module 11;
the event distributing module 11 is configured to: send the received operation event to the floating window control module 12;
the floating window control module 12 is configured to: after determining that the received operation event is a preset floating window operation control event, take the coordinates of the operation event as the coordinates of the floating window, and notify the coordinates of the floating window to the display control module 13; and
the display control module 13 is configured to: receive the coordinates of the floating window from the floating window control module 12, and display the floating window at the position on the display screen corresponding to the coordinates of the floating window.

After the present terminal receives the operation event, it can directly display the floating window from the source coordinates to the coordinates of the operation event, and it can also display the process of moving the floating window along the trajectory from the source coordinates to the coordinates of the operation event. The floating window control module 12 is further configured to: before receiving the operation event, take the coordinates of the floating window on the display screen as the source coordinates, and take the coordinates of the operation event as the target coordinates, and determine N coordinates on the trajectory from the source coordinates to the target coordinates, wherein, N is an integer greater than zero; sequentially take N coordinates as the coordinates of the floating window, and notify them to the display control module 13, and take the coordinates of the operation event as the coordinates of the floating window, and notify them to the display control module 13. Wherein the trajectory from the source coordinates to the target coordinates can be a line segment trajectory, or a preset type of curved trajectory.

Taking into account that when the position of the user's operation event is relatively close to the boundary of the display screen, it may cause that the floating window cannot be displayed in full, and the floating window control module 12 is further configured to: after receiving the operation event, when determining that the horizontal distance from the coordinates of the operation event to the boundary of the display screen is less than a half of the length of the floating window, revise the coordinates of the operation event on the display screen so that the horizontal distance from the coordinates of the operation event to the boundary of the display screen is equal to or greater than a half of the length of the floating window; and when determining that the vertical distance from the coordinates of the operation event to the boundary of the display screen is less than a half of the width of the floating window, revise the coordinates of the operation event on the display screen so that the vertical distance from the coordinates of the operation event to the boundary of the display screen is equal to or greater than a half of the width of the floating window.

When the user operates the terminal through the buttons, the floating window operation control event refers to an event that the user determines the target point through the buttons, and the coordinates of the operation event are the coordinates of the target point on the display screen.

When the user operates the terminal through the touch screen, that is, when said display screen is a touch screen in the present embodiment, the floating window operation control event is a long-pressing operation event, a double-clicking operation event or a swiping operation event; the coordinates of the operation event are the coordinates of the operation event on the touch screen.

The present terminal can easily locate the floating window to the position desired by the user on the display screen, and then a shortcut operation is made, especially for the terminal with touch screen, it allows the user to easily acquire the floating window anywhere on the display screen.

The method for controlling the position of the floating window, applied to the abovementioned terminal, comprises: the terminal receiving the user's operation event, after determining that the received operation event is a preset floating window operation control event, taking the coordinates of the operation event on the display screen as the coordinates of the floating window, and displaying the floating window at the position on the display screen corresponding to the coordinates of the floating window.

After the terminal receives the operation event, it can directly display the floating window from the source coordinates to the coordinates of the operation event, and it an also display the process of moving the floating window along the trajectory from the source coordinates to the coordinates of the operation event. Said method further comprises: before said terminal receives the operation event, taking the coordinates of the floating window on the display screen as the source coordinates, and taking the coordinates of the operation event on the display screen as the target coordinates, determining N coordinates on the trajectory from the source coordinates to the target coordinates, wherein, N is an integer greater than zero; sequentially taking N coordinates as the coordinates of the floating window, and displaying the floating window at the position on the display screen corresponding to the coordinates of the floating window, and taking the coordinates of the operation event on said display screen as the coordinates of the floating window, and displaying the floating window at the position on the display screen corresponding to the coordinates of the floating window.

Considering that the position touched by the user is relatively close to the boundary of the display screen, it may cause that the floating window cannot be displayed in full, and said method further comprises: after said terminal receives the operation event, when determining that the horizontal distance from the coordinates of the operation event to the boundary of the display screen is less than a half of the length of the floating window, revising the coordinates of the operation event on the display screen so that the horizontal distance from the coordinates of said operation event to the boundary of the display screen is equal to or greater than a half of the length of the floating window; and when determining that the vertical distance from the coordinates of the operation event to the boundary of the display screen is less than a half of the width of the floating window, revising the coordinates of the operation event on the display screen so that the vertical distance from the coordinates of said operation event to the boundary of the display screen is equal to or greater than a half of the width of the floating window.

When the user operates the terminal through the buttons, the floating window operation control event refers to an event that the user determines the target point through the buttons, and the coordinates of the operation event are the coordinates of the target point on the display screen.

When the user operates the terminal through the touch screen, that is, when said display screen is a touch screen in the present embodiment, the floating window operation control event is a long-pressing operation event, a double-clicking operation event or a swiping operation event; the coordinates of the operation event are the coordinates of the operation event on the touch screen.

In the following, it will be described with specific embodiments.

### The first embodiment

As shown in FIG. 2, assuming that the long-pressing operation is a floating window operation which has been set, and the long-pressing operation can also be called as a calling operation, the user holds the phone to use by right hand, in which case the user wants to use the shortcut module on the floating window while the floating window is in the lower left side on the screen, that is S1 in FIG. 2, and the floating window is unable to be clicked. According to the scheme in accordance with an embodiment of the present invention, the user performs a long-pressing operation at a position in the upper right side of the screen, that is, the S2 in FIG. 2, and after the terminal obtains the long-press event and the coordinates of the touching position, it directly display the floating window at the position of the user's touching point, such as S3 in FIG. 2. Therefore, the floating window eventually reaches the position where the floating window is operable by the user's right hand, and the user can perform operation freely.

### The second embodiment

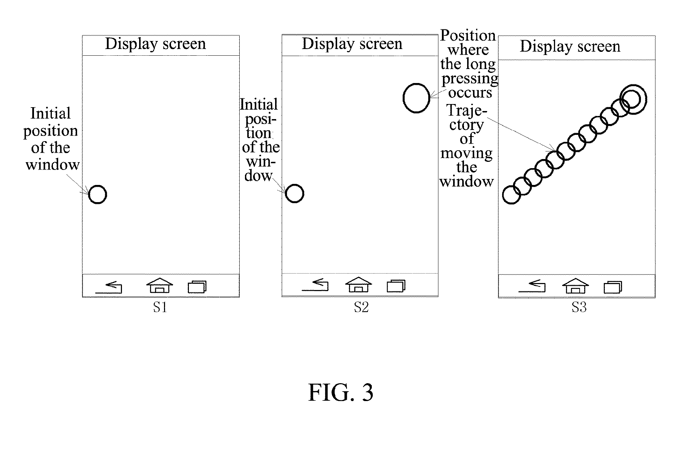

As shown in FIG. 3, assuming that the long-pressing operation is a floating window operation which has been set, and the long-pressing operation can also be called as a calling operation, the user holds the phone to use by right hand, in which case the user wants to use the shortcut module on the floating window while the floating window is in the lower left side of the screen, such as S1 in FIG. 3, and the floating window is unable to be clicked. According to the scheme according to the embodiment of the present invention, the user performs a long-pressing operation in the upper right side of the screen, that is, S2 in FIG. 3, after the terminal acquires the long-pressing event and the coordinates of the touching position, it automatically move the floating window to the position of the user's touch point, such as the S3 in FIG. 3, in accordance with a shortest straight line trajectory. Therefore, the floating window eventually reaches the position where the floating window is operable by the user's right hand, and the user can perform operation freely.

In the scheme for moving the floating window and moving it to the position where it is convenient for the user to touch provided by the embodiment of the present invention, it does not require the user to press and drag the floating window to move the floating frame, and the user directly touches any position of the touch screen, and the floating window can eventually be located to the specified position, so as to make the floating window in place according to the needs of user, so as to achieve the ease for use of the terminal and improve the user experience.

Of course, the present invention can also have a variety of other embodiments, and without departing from the spirit and essence of the present invention, a person skilled in the art may make various changes and modifications according to the present invention, and these corresponding changes and modifications shall belong to the protection scope of the appended claims of the present invention.

Those ordinarily skilled in the art can understand that all or some of steps in the abovementioned method may be completed by the programs instructing the relevant hardware, and said programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiment may be realized in the form of hardware or software function module. The embodiment of the present invention is not limited to any specific form of hardware and software combinations.

### Industrial Applicability

The scheme for moving the floating window and moving it to the position required by the user provided by the embodiment of the present invention, for the non-touch screen, can easily control the position of the floating window with the buttons; for the touch screen, it does not require the user to press and drag the floating window so as to move the floating frame, and the user directly touches any position on the touch screen, and the floating window can eventually be located to the specified location, so as to make the floating window in place according to the needs of user, so as to achieve the ease for use of the terminal and improve the user experience.

## Claims

1. A terminal, comprising: a display screen, a user operation receiving module, an event distributing module, a floating window control module and a display control module; wherein
said user operation receiving module is configured to: receive and send an operation event of a user to said event distributing module;
said event distributing module is configured to: send the received operation event to said floating window control module;
said floating window control module is configured to: after determining that the received operation event is a preset floating window operation control event, take coordinates of said operation event as coordinates of a floating window, and notify the coordinates of said floating window to said display control module; and
said display control module is configured to: receive the coordinates of said floating window from said floating window control module, and display said floating window at a position on the display screen corresponding to the coordinates of said floating window.

2. The terminal of claim 1, wherein,
said floating window control module is further configured to: before receiving said operation event, take the coordinates of said floating window on the display screen as source coordinates, take the coordinates of said operation event as target coordinates, determine N coordinates on a trajectory from said source coordinates to said target coordinates, wherein, N is an integer greater than zero; sequentially take said N coordinates as coordinates of said floating window which are notified to said display control module, and take the coordinates of said operation event as coordinates of said floating window which are notified to said display control module.

3. The terminal of claim 2, wherein,
said trajectory from said source coordinates to said target coordinates is a line segment trajectory.

4. The terminal of claim 1 or 2 or 3, wherein,
said floating window control module is further configured to: after receiving said operation event, when determining that a horizontal distance from the coordinates of said operation event to a boundary of said display screen is less than a half of length of said floating window, revise the coordinates of said operation event on said display screen so that the horizontal distance from the coordinates of said operation event to the boundary of said display screen is equal to or greater than a half of the length of said floating window; when determining that a vertical distance from the coordinates of said operation event to the boundary of said display screen is less than a half of width of said floating window, revise the coordinates of said operation event on said display screen so that the vertical distance from the coordinates of said operation event to the boundary of said display screen is equal to or greater than a half of the width of said floating window.

5. The terminal of claim 1 or 2 or 3, wherein,
when said display screen is a touch screen, said floating window operation control event is a long-pressing operation event, a double-clicking operation event or a swiping operation event.

6. A method for controlling a position of a floating window, comprising:
a terminal receiving an operation event of a user, after determining that the received operation event is a preset floating window operation control event, taking coordinates of said operation event on a display screen as coordinates of the floating window, and displaying said floating window at a position on the display screen corresponding to the coordinates of said floating window.

7. The method of claim 6, further comprising:
before said terminal receives said operation event, taking the coordinates of said floating window on said display screen as source coordinates, taking the coordinates of said operation event on said display screen as target coordinates, determining N coordinates on a trajectory from said source coordinates to said target coordinates, wherein, N is an integer greater than zero; sequentially taking said N coordinates as coordinates of said floating window, and displaying said floating window at a position on said display screen corresponding to the coordinates of said floating window, and taking the coordinates of said operation event on said display screen as the coordinates of said floating window, and displaying said floating window at the position on said display screen corresponding to the coordinates of said floating window.

8. The method of claim 7, wherein,
said trajectory from said source coordinates to said target coordinates is a line segment trajectory.

9. The method of claim 6 or 7 or 8, further comprising:
after said terminal receives said operation event, when determining that a horizontal distance from the coordinates of said operation event to a boundary of said display screen is less than a half of length of said floating window, revising the coordinates of said operation event on said display screen, so that the horizontal distance from the coordinates of said operation event to the boundary of said display screen is equal to or greater than a half of the length of said floating window; when determining that a vertical distance from the coordinates of said operation event to the boundary of said display screen is less than a half of width of the floating window, revising the coordinates of said operation event on said display screen so that the vertical distance from the coordinates of said operation event to the boundary of said display screen is equal to or greater than a half of the width of said floating window.

10. The method of claim 6 or 7 or 8, wherein,
when said display screen is a touch screen, said floating window operation control event is a long-pressing operation event, a double-clicking operation event or a swiping operation event.
